# EUROPEAN PATENT APPLICATION

(11) **EP 1 126 724 A2**
(43) Date of publication of application: **22.08.2001**
(21) Application number: 01103228.1
(22) Date of filing: 12.02.2001
(51) Int. Cl.: H04N 7/62

(54) **Decoding apparatus, and synchronous reproduction control method**

(30) Priority: 14.02.2000 JP 2000035743
(71) Applicant: NEC CORPORATION, Tokyo (JP)
(72) Inventor: Ishi, Mitsuhiro, c/o NEC Corporation, Tokyo (JP)
(74) Representative: Glawe, Delfs, Moll & Partner

(57) **Abstract**

A decoding apparatus for simultaneously decoding and reproducing coded image or voice data of a plurality of channels, and relevant decoding synchronous control apparatus and method for performing synchronous control are disclosed, by which the size of the apparatus can be reduced. In the decoding synchronous control apparatus and method, the image data or voice data is assigned to first to nth channels, n being an integer of 2 or more, and the data reproduction is performed based on reference time data indicating a reference time at the coding side, and reproduction time data indicating a target reproduction time based on the reference time at the coding side, and synchronous control of each channel is performed in time-division form.

## Description

### BACKGROUND OF THE INVENTION

### Field of the Invention

The present invention relates to decoding of coded image or voice data, in particular, to a decoding synchronous control apparatus, decoding apparatus, and decoding synchronous control method.

### Description of the Related Art

Recently, the MPEG (Moving Picture Experts Group) standard has been put to practical use as a moving picture coding method, and more specifically, there are two types of MPEG, that is, MPEG1 (ITU-T (International Telecommunications Union-Telecommunications Standardization Sector) Advice H. 261) relating to moving pictures and storage media, and MPEG2 (ITU-T Advice H. 262) for improving the image quality and transmission speed.

In particular, MPEG2 has become the focus of attention as a media-integrationtype moving picture coding standard, which is applicable to various fields such as communication, data storage, broadcast, and computer systems. Due to MPEG2, the SDTV (standard-definition television) quality (typically according to the NTSC method) can be realized by an information content of 4 to 9 Mbit/s, while the HDTV (high-definition television) quality can be realized by an information content of 15 to 30 Mbit/s. Below, both the MPEG1 and MPEG2 will be simply called MPEG.

This MPEG also defines coding of voice data, so as to realize synchronous reproduction of coded image and voice data. Below, the basic synchronous reproducing method of image and voice data will be explained.

The image or voice data coded in the MPEG format is transferred as a bit stream to a decoding apparatus, and the bit stream also includes time data (or time information) for reproducing image and voice data in synchronism with each other.
This time data includes (i) reference time data indicating a reference time at the coding side, and (ii) reproduction time data indicating a target decoding/reproduction time based on the reference time at the coding side. Here, reproduction time data for image-data coding and reproduction, and reproduction time data for voice-data coding and reproduction are separately transmitted (i.e., there are image reproduction time data and voice reproduction time data), and the reproduction time data is provided for each data unit to be decoded and reproduced.

The above reference time is a time counted up by using STC (system time clock) in the MPEG standard, which is provided in both the coding apparatus and the decoding apparatus. The above reference time data is one of SCR (system clock reference) and PCR (program clock reference), both being defined in the MPEG standard. The above reproduction time data is one of PTS (presentation time stamp) and DTS (decoding time stamp). Here, SCR and PTS are mainly included in bit streams used for broadcasts, while PTS and DTS are mainly included in bit streams used for digital data storage media such as DVDs (digital video disks).

According to the above reference time data included in each bit stream, the reference time of the coding apparatus can be reproduced as the reference time of the decoding apparatus. When this reference time reproduced in the decoding apparatus agrees with the image reproduction time data, relevant image data is decoded and reproduced. Similarly, when the reference time reproduced in the decoding apparatus agrees with the voice reproduction time data, relevant voice data is decoded and reproduced. That is, each of image data and voice data is reproduced at a suitable time point of the reference time (corresponding to the reference time of the coding side), so that the image and voice data can be reproduced in synchronism with each other.

In digital television broadcasts such as BS (broadcast satellite) digital broadcasts, multi-channel systems are generally employed; for example, SDTV images of 3 to 4 channels are simultaneously broadcast through a single channel as HDTV images compressed by the MPEG format. In such a multi-channel TV format, viewers may want to view or record TV programs of multi-channels, or synthesize images of multi-channels and simultaneously view the synthesized images. In order to satisfy such a demand, image and voice data of multi-channels must be simultaneously decoded, and the image and voice data of each channel must be reproduced in synchronism with each other.

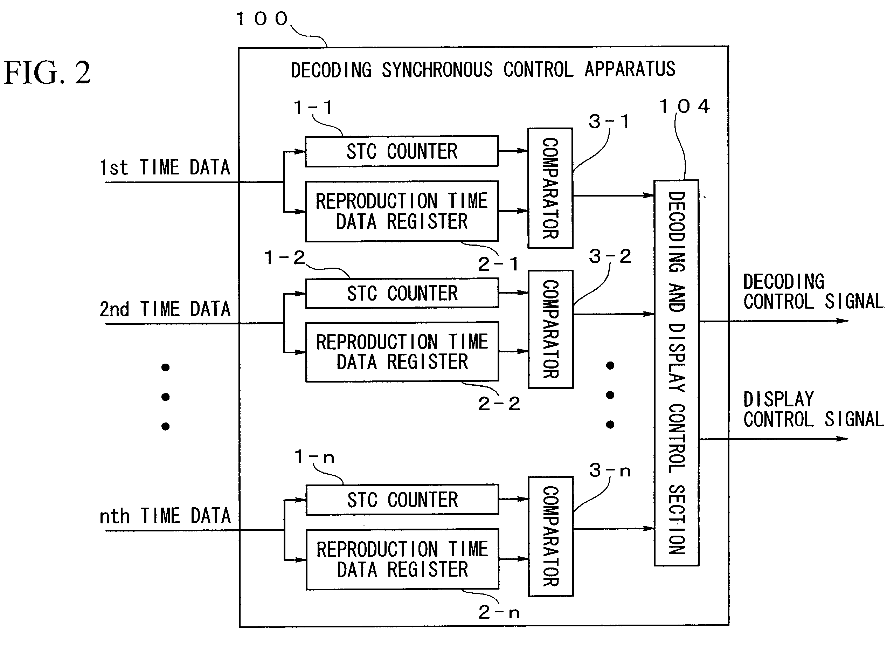

Fig. 2 is a block diagram showing the structure of a conventional decoding synchronous control apparatus 100 for performing the synchronous control so as to reproduce image data and/or voice data of channel 1 to n (n is an integer of 2 or more), compressed using the MPEG format, in synchronism with each other. In the figure, the decoding synchronous control apparatus 100 performs synchronous control of image data; however, synchronous control of voice data is also performed using a similar structure. In addition, the first to nth time data input into the decoding synchronous control apparatus 100 are SCR and PTS of each of channels 1 to n in the following explanation.

In the decoding synchronous control apparatus 100 of Fig. 2, reference numerals 1-1 to 1-n indicate STC counters for receiving SCR data of channels 1 to n, and each STC counter reproduces the reference time at the coding side by counting up the time in specified intervals from the relevant SCR, reference numerals 2-1 to 2-n indicate reproduction time data registers for storing input PTS data of channels 1 to n, reference numerals 3-1 to 3-n indicate comparators for respectively comparing counter values of the STC counters 1-1 to 1-n with corresponding register values stored in the reproduction time data registers 2-1 to 2-n, and reference numeral 104 indicates a decoding and display control section for controlling the image decoding or image display of channels 1 to n based on difference values output from the comparators 3-1 to 3-n.

In the conventional decoding synchronous control apparatus 100, when SCR data of the channels 1 to n are input, each of the STC counters 1-1 to 1-n counts up the time from the relevant SCR in specified intervals. On the other hand, when PTS data of the channels 1 to n are input, the PTS data are respectively stored in the corresponding reproduction time data registers 2-1 to 2-n. Next, the comparators 3-1 to 3-n respectively calculate difference values between the counter values of STC counters 1-1 to 1-n and corresponding register values of the reproduction time data registers 2-1 to 2-n, and output calculated difference values to the decoding and display control section 104. Based on the input difference values of each channel, the decoding and display control section 104 outputs a decoding control signal for controlling the image decoding of each channel (1 to n) or a display control signal for controlling the image display of each channel (1 to n).

Synchronous control of the decoding or display operation is performed according to the decoding control signal or display control signal, so that the image of each channel is normally reproduced in synchronism with voice data.

However, in the above-explained conventional decoding synchronous control apparatus, since each decoding channel must have an STC counter, a reproduction time data register, and a comparator, the size of the apparatus must be large.

### SUMMARY OF THE INVENTION

In consideration of the above circumstances, the present invention relates to a decoding apparatus for simultaneously decoding and reproducing coded image or voice data of a plurality of channels, and an objective of the present invention is to provide a decoding synchronous control apparatus, decoding apparatus, and decoding synchronous control method by which the size of the apparatus can be reduced.

Therefore, the present invention provides a decoding synchronous control apparatus for performing synchronous control for reproducing image data and voice data, coded using the MPEG format, in synchronism with each other, where the image data or voice data is assigned to first to nth channels, n being an integer of 2 or more, and the data reproduction is performed based on reference time data indicating a reference time at the coding side, and reproduction time data indicating a target reproduction time based on the reference time at the coding side, the apparatus comprising:
a selecting section for selecting each of the first to nth channels as a target channel for synchronous control in turn at predetermined intervals, and outputting the reference time data and the reproduction time data of the target channel;
a counter for counting up the time from the reference time data, output from the selecting section, in specified intervals;
a register for storing the reproduction time data output from the selecting section;
a comparator for comparing a counter value of the counter and a register value of the register, so as to calculate a difference value of the values; and
a control section for performing synchronous control of the target channel based on the difference value calculated by the comparator and on status information for indicating the status of reproduction of the target channel, and
wherein synchronous control of each channel is performed in time-division form.

The present invention also provides a decoding synchronous control apparatus for performing synchronous control for reproducing coded image data and voice data in synchronism with each other, where the image data or voice data is assigned to first to nth channels, n being an integer of 2 or more, and the data reproduction is performed based on reference time data indicating a reference time at the coding side, and reproduction time data indicating a target reproduction time based on the reference time at the coding side, wherein synchronous control of each channel is performed in time-division form.

This decoding synchronous control apparatus may further comprise:
a selecting section for selecting each of the first to nth channels as a target channel for synchronous control in turn at predetermined intervals, and outputting the reference time data and the reproduction time data of the target channel;
a counter for counting up the time from the reference time data, output from the selecting section, in specified intervals;
a register for storing the reproduction time data output from the selecting section;
a comparator for comparing a counter value of the counter and a register value of the register, so as to calculate a difference value of the values; and
a control section for performing synchronous control of the target channel based on the difference value calculated by the comparator and on status information for indicating the status of reproduction of the target channel.

The above selecting section may select any one of the first to nth channels as the target channel based on information about bit streams of the first to nth channels which include the reference time data, reproduction time data, and coded data.

As a typical example, when a discontinuity is detected in data of a bit stream, the channel corresponding to the bit stream is given priority to be selected by the selecting section as the target channel.

As another typical example, when an error is detected in data of a bit stream, the channel corresponding to the bit stream is given priority to be selected by the selecting section as the target channel.

Preferably, among the first to nth channels, the selecting section does not select a channel, in which only one of image data or voice data is being reproduced, as the target channel.

Typically, the selection section detects the reference time data and the reproduction time data in a bit stream input into the selecting section.

Also typically, synchronous control is performed in any one or both of decoding control of the coded data or reproduction control of the decoded data.

The present invention also provides a decoding apparatus for decoding and reproducing image data or voice data coded using the MPEG format, where the image data or voice data is included in first to nth bit streams input into the decoding apparatus, corresponding to first to nth channels, n being an integer of 2 or more, the apparatus comprising:
a selecting section for:
   selecting each of the first to nth channels as a target channel for synchronous control in turn at predetermined intervals, the synchronous control being performed for reproducing the image data and voice data in synchronism with each other; and
   detecting reference time data indicating a reference time at the coding side, and reproduction time data indicating a target reproduction time based on the reference time at the coding side, in the bit stream of the target channel, and outputting the detected data;
a counter for counting up the time from the reference time data, output from the selecting section, in specified intervals;
a register for storing the reproduction time data output from the selecting section;
a comparator for comparing a counter value of the counter and a register value of the register, so as to calculate a difference value of the values; and
a control section for performing any one or both of decoding control of the coded data or reproduction control of the decoded data of the target channel, based on the difference value calculated by the comparator and on status information for indicating the status of reproduction of the target channel, and
wherein synchronous control of each channel is performed in time-division form.

The present invention also provides a decoding apparatus for decoding and reproducing coded image data or voice data which is included in first to nth bit streams input into the decoding apparatus, corresponding to first to nth channels, n being an integer of 2 or more, the decoding apparatus comprising:
a decoding synchronous control apparatus for performing synchronous control for reproducing the image data and voice data in synchronism with each other, based on reference time data and reproduction time data included in the first to nth bit streams, where the reference time data indicates a reference time at the coding side, and the reproduction time data indicates a target reproduction time based on the reference time at the coding side, and synchronous control of each channel is performed in time-division form.

In this decoding apparatus, the decoding synchronous control apparatus may comprise:
a selecting section for selecting each of the first to nth channels as a target channel for synchronous control in turn at predetermined intervals, and detecting the reference time data and the reproduction time data in the bit stream of the target channel, and outputting the detected data;
a counter for counting up the time from the reference time data, output from the selecting section, in specified intervals;
a register for storing the reproduction time data output from the selecting section;
a comparator for comparing a counter value of the counter and a register value of the register, so as to calculate a difference value of the values; and
a control section for performing any one or both of decoding control of the coded data or reproduction control of the decoded data of the target channel, based on the difference value calculated by the comparator and on status information for indicating the status of reproduction of the target channel.

The present invention also provides a decoding synchronous control method for performing synchronous control for reproducing image data and voice data, coded using the MPEG format, in synchronism with each other, where the image data or voice data is assigned to first to nth channels, n being an integer of 2 or more, and the data reproduction is performed based on reference time data indicating a reference time at the coding side, and reproduction time data indicating a target reproduction time based on the reference time at the coding side, the method comprising the steps of:
selecting each of the first to nth channels as a target channel for synchronous control in turn at predetermined intervals, and outputting the reference time data and the reproduction time data of the target channel;
counting up the time from the output reference time data in specified intervals;
storing the output reproduction time data;
comparing a value obtained by the count-up operation and a value of the stored output reproduction time data, so as to calculate a difference value of the values; and
performing any one or both of decoding control of the coded data or reproduction control of the decoded data of the target channel, based on the difference value and on status information for indicating the status of reproduction of the target channel, and
wherein synchronous control of each channel is performed in time-division form.

The present invention also provides a decoding synchronous control method for performing synchronous control for reproducing coded image data and voice data in synchronism with each other, where the image data or voice data is assigned to first to nth channels, n being an integer of 2 or more, and the data reproduction is performed based on reference time data indicating a reference time at the coding side, and reproduction time data indicating a target reproduction time based on the reference time at the coding side, the method comprising the step ofperforming synchronous control of each channel in time-division form.

In this method, the above step may include the steps of:
selecting each of the first to nth channels as a target channel for synchronous control in turn at predetermined intervals, and outputting the reference time data and the reproduction time data of the target channel;
counting up the time from the output reference time data in specified intervals;
storing the output reproduction time data;
comparing a value obtained by the count-up operation and a value of the stored output reproduction time data, so as to calculate a difference value of the values; and
performing any one or both of decoding control of the coded data or reproduction control of the decoded data of the target channel based on the difference value and on status information for indicating the status of reproduction of the target channel.

According to the present invention, the structure has the selecting section for selecting each of the first to nth channels as a target channel for synchronous control in turn at predetermined intervals, and synchronous control of channels 1 to n is performed by using the counter, register, and comparator in common in the time-division operation. Accordingly, the image data of channels 1 to n are normally reproduced in synchronism with voice data, and the size of the apparatus can be reduced in comparison with conventional decoding synchronous control apparatuses.

In addition, a channel, in which an error or discontinuity of image data is detected in a bit stream, is given priority to be selected as the target channel for synchronous control, thereby reliably maintaining the synchronous reproduction of image and voice data of the relevant channel.

Furthermore, among the first to nth channels, the selecting section does not select a channel, in which only one of image data or voice data is being reproduced, as the target channel. Therefore, synchronous control is sufficiently performed for channels which need synchronous control (that is, such channels can have sufficient time for synchronous control), so that the synchronous reproduction of image and voice data can be more reliably performed.

### BRIEF DESCRIPTION OF THE DRAWINGS

Fig. 1 is a block diagram showing the structure of a decoding apparatus 10 as an information according to the present invention.

Fig. 2 is a block diagram showing the structure of a conventional decoding synchronous control apparatus 100.

### DESCRIPTION OF THE PREFERRED EMBODIMENTS

Hereinafter, an embodiment according to the present invention will be explained in detail with reference to the drawings.

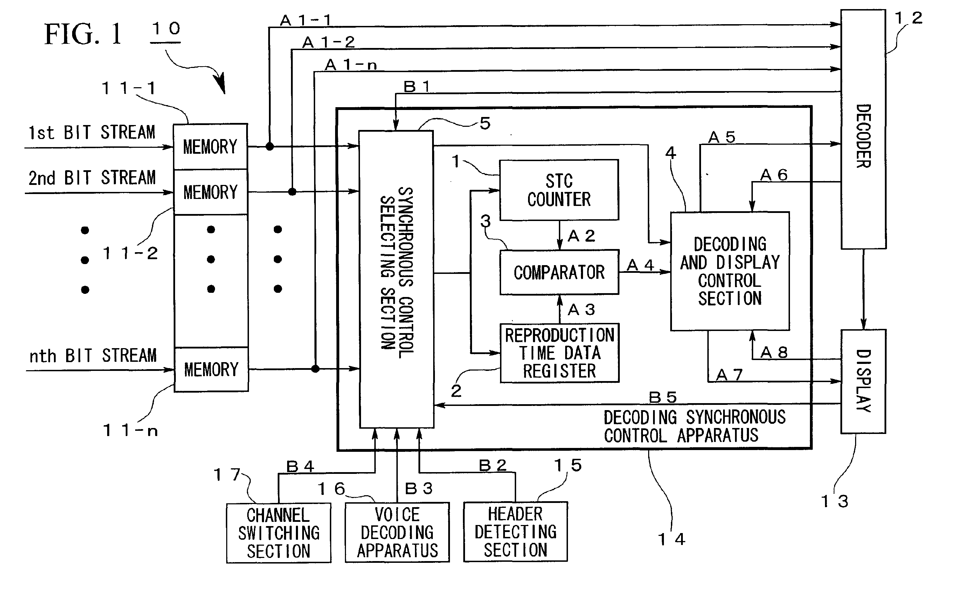

Fig. 1 is a block diagram showing the structure of decoding apparatus 10 of an embodiment of the present invention. In this figure, the first to nth bit streams corresponding to input channels 1 to n (n is an integer of 2 or more) respectively include image data (compressed using the MPEG format), and control data such as time data of channels 1 to n. In the following explanation, time data included in the first to nth bit streams are SCR and PTS.

In Fig. 1, reference numerals 11-1 to 11-n indicate memories for temporarily storing input data of the first to nth bit streams, and reference numeral 12 indicates a decoder for decoding image data in bit stream data A1-1 to A1-n (of channels 1 to n) read out from the memories 11-1 to 11-n by performing time-division multiplex processing based on a decoding control signal A5 input from the decoding synchronous control apparatus 14. The decoder 12 outputs each decoded data. Reference numeral 13 indicates a display for receiving image signals of channels 1 to n output from decoder 12 and displaying relevant images based on a display control signal A7.

The decoder 12 outputs (i) decoding status information A6 which indicates the decoding status such as frame information for indicating a decoded frame of image data of each channel 1 to n, and (ii) error information B of the input bit stream data A1-1 to A1-n, to the decoding synchronous control apparatus 14. When the decoder 12 detects the header of each of input bit stream data A1-1 to A1-n, if an error is detected in the relevant bit stream data, or if a discontinuity of image data is detected in the relevant bit stream data according to the detected header information, the decoder 12 outputs the error information B 1 as information of a channel in which an error or data discontinuity is detected.

The display 13 outputs (i) display status information A8 which indicates the image displaying status such as frame information for indicating a displayed frame of image data of each channel (1 to n), and (ii) display information B5 of the screen, to the decoding synchronous control apparatus 14. The display information B5 is channel information indicating which of the channels displayed on the screen has voice data, that is, indicating channel(s) which need synchronous reproduction of image and voice data.

The bit stream data A1-1 to A1-n, retrieved from the memories 11-1 to 11-n by the decoder 12, are also input into the decoding synchronous control apparatus 14, and based on SCR and PTS of the input bit stream data A1-1 to A1-n, the decoding synchronous control apparatus 14 controls (i) the decoding operation (performed by the decoder 12) of the image data of each channel 1 to n, and (ii) the image displaying operation of each channel 1 to n in the display 13.

Reference numeral 15 indicates a header detecting section for detecting the header in each of the first to nth bit streams. This header detecting section is an optional section for detecting an error and outputting error information.

Reference numeral 16 indicates a voice decoding apparatus for decoding and reproducing voice data of multi-channels, which have been coded using the MPEG format, and reference numeral 17 indicates a channel switching section for selecting a channel for which the decoding apparatus 10 reproduces or displays data.

When the header detecting section 15 detects the header of each of the input bit streams A1-1 to A1-n, if an error is detected in the relevant bit stream or if a discontinuity in the relevant bit stream is detected according to the detected header information, the header detecting section 15 outputs error information B2 to the decoding synchronous control apparatus 14, where error information B2 indicates information of a channel in which an error or data discontinuity is detected.

Similarly, the voice decoding apparatus 16 outputs error information B3 indicating information of a channel, in which an error or data discontinuity is detected, to the decoding synchronous control apparatus 14. The channel switching section 17 outputs channel selection information B4 to the decoding synchronous control apparatus 14, where the channel selection information B4 indicates information of a channel selected or switched by a user (i.e., a channel of a displayed image selected or switched by the user).

The above-described discontinuity of image data is detected, for example, when one of three channels displayed on the screen of display 13 is switched to another channel. In this case, the discontinuity is detected as channel switching information. On the other hand, if the program is changed in the same channel or if the program is switched to an emergency program, the discontinuity is detected with reference to the header data in the bit stream data.

Next, the structure of the decoding synchronous control apparatus 14 shown in Fig. 1 will be explained. In Fig. 1, reference numeral 1 indicates an STC counter for counting up the time from reference time data SCR (input from the synchronous control selecting section 5) in specified intervals, so as to reproduce the reference time at the coding side, and outputs counter value A2 indicating the reproduced reference time.

Reference numeral 2 indicates a reproduction time data register for storing PTS input from the synchronous control selecting section 5 and outputting register value A3 which indicates the reproduction time of an image.

Reference numeral 3 indicates a comparator for comparing the counter value A2 input from the STC counter 1 with the register value A3 input from the reproduction time data register 2, and outputting difference value A4.

Reference numeral 4 indicates a decoding and display control section for outputting decoding control signal A5 or display control signal A7 based on difference value A4 input from the comparator 3, and decoding status information A6 input from decoder 12 or display status information A8 input from display 13. The decoding control signal A5 is used for controlling the image decoding of a target channel (for synchronous control) communicated from the synchronous control selecting section 5, and the display control signal A7 is used for controlling the image display of such a target channel.

The synchronous control selecting section 5 selects a target channel for synchronous control among channels 1 to n in turn (i.e., time-division selection), and informs the decoding and display control section 4 of the selected channel. The synchronous control selecting section 5 also detects SCR and PTS in the input bit stream data (A1-1, A1-2, ... or A1-n) of the selected target channel for synchronous control. In addition, this synchronous control selecting section 5 determines which SCR and PTS (of a channel) are given priority to be output, based on input error information B1 to B3 or channel selection information B4.

Below, the operation of the above-explained decoding synchronous control apparatus 14 shown in Fig. 1 will be explained.

First, the operation for performing synchronous control of the image decoding (by the decoder 12) or the image display (by the display 13) will be explained.

When the bit stream data A1-1 to A1-n are retrieved by the decoder 12 from the memories 11-1 to 11-n, these data are also input into the synchronous control selecting section 5. The section 5 then detects SCR and PTS of the currently selected channel (i.e., target channel for synchronous control), and outputs them. The SCR output from the synchronous control selecting section 5 is provided to the STC counter 1, and the time is counted up from STC in specified intervals. On the other hand, the PTS output from the synchronous control selecting section 5 is stored in the reproduction time data register 2.

Next, the comparator 3 compares the counter value A2 of the STC counter 1 and the register value A3 of the reproduction time data register 2, so as to calculate the difference value A4. The difference value A4 calculated by the comparator 3 has a positive or negative value, except for the case in which the absolute value is 0. If the sign of the difference value A4 is positive, the counter value A2 is larger than the register value A3, while if the sign of the difference value A4 is negative, the register value A3 is larger than the counter value A2.

The decoding and display control section 4 then performs synchronous control of the image decoding (in the decoder 12) and the image display (in the display 13) based on the absolute value and sign of the difference value A4 calculated by the comparator 3, and on the decoding status information A6 or display status information A8 which indicates the reproduction status of the coded data. Synchronous control of the image decoding or display is executed as follows.

If the difference value A4 is positive (i.e., the sign is positive), the target reproduction time of a data unit to be decoded and reproduced of the target channel has passed. Therefore, based on the absolute value of the difference value A4 and the decoding status information A6 or display status information A8, the decoding control signal A5 or display control signal A7 is output so that the decoding and display of the relevant data of the channel is skipped so as to adjust the reproduction time of the data.

On the other hand, if the difference value A4 is negative (i.e., the sign is negative), the target reproduction time of a data unit to be decoded and reproduced of the target channel is in the future. Therefore, based on the absolute value of the difference value A4 and the decoding status information A6 or display status information A8, the decoding control signal A5 or display control signal A7 is output so that the decoding and display of the relevant data of the channel is on standby so as to adjust the reproduction time of the data.

On the other hand, if the difference value A4 is 0, the target reproduction time of a data unit to be decoded and reproduced of the target channel is just on time. Therefore, it is determined whether the decoding control signal A5 or the display control signal A7 is output, based on the decoding status information A6 or display status information A8.

The image of the target channel is then decoded by the decoder 12 based on the decoding control signal A5, or the image of target channel is then displayed by the display 13 based on the display control signal A7, thereby performing synchronous control. According to such a synchronous control, the image of the target channel is normally reproduced in synchronism with voice data because the voice data is reproduced based on the same reference time.

The operation of the synchronous control selecting section 5 will be explained in detail.

Initially, the synchronous control selecting section 5 selects channel 1 as the target channel for synchronous control. Until the next channel is selected by the synchronous control selecting section 5, the section 5 detects SCR and PTS every time the bit stream data A1-1 is input into the section 5.

After a predetermined time has passed, the synchronous control selecting section 5 selects channel 2 as the target channel for synchronous control. Similar to the operation for channel 1, until the next channel is selected by the synchronous control selecting section 5, the selecting section 5 detects SCR and PTS every time the bit stream data A1-2 is input into the selecting section 5.

After a predetermined time has passed, the synchronous control selecting section 5 selects channel 3, and detects and outputs SCR and PTS related to channel 3 in a similar operation.

After that, each of the following channels 4 to n is selected in turn, and the synchronous control selecting section 5 detects and outputs SCR and PTS of each channel. After the channel n is selected, each of the channels 1 to n is selected in turn again, and SCR and PTS of each selected channel are detected and output.

As explained above, the synchronous control selecting section 5 selects each of the channels 1 to n as the target channel for synchronous control in turn in specified intervals. Additionally, when a channel is selected, this channel is decided as the target channel and the above-explained synchronous control is executed until the next channel is selected. According to the time-division operation of the synchronous control selecting section 5, each of the channels 1 to n is selected as the target channel for synchronous control in turn, and as a result, the decoding synchronous control apparatus 14 can perform synchronous control of all the channels in time-division form.

In the above-explained time-division operation of the synchronous control selecting section 5, when the error information B1 to B3 or channel selection information B4 is input, a channel indicated by the information, that is, a channel in which an error has been detected in the relevant bit stream data or in which a discontinuity of image data is detected, is given priority to be selected. For example, when channel 2 has been selected as the target channel, if an error or discontinuity of image data is detected in channel 5, then channel 5 is next selected as the target channel, and channel 3 is selected after channel 5.

As explained above, a channel in which an error or discontinuity of image data is detected is given priority to be selected as the target channel for synchronous control, thereby reliably maintaining the synchronous reproduction of image and voice data of the relevant channel.

Here, channels other than those which need the synchronous reproduction of image and voice data as indicated by the display information B5, are not selected as the target channel for synchronous control. For example, among channels for which images are displayed on the screen of the display 13, the channel related to an image without voice data is not selected as the target channel for synchronous control. Therefore, synchronous control is sufficiently performed for channels which need synchronous control (that is, such channels can have sufficient time for synchronous control), so that the synchronous reproduction of image and voice data can be more reliably performed.

In the above embodiment, in the decoding synchronous control apparatus 14, synchronous control of channels 1 to n is performed by using the STC counter 1, reproduction time data register 2, and comparator 3 in common in the time-division operation. Accordingly, the image data of channels 1 to n are normally reproduced in synchronism with voice data, and the size of the apparatus can be reduced in comparison with the conventional decoding synchronous control apparatus 100.

Also in the above embodiment, the time data included in the first to nth bit streams are SCR and PTS; however, PCR and DTS are also possible.

Also in the above embodiment, the decoding synchronous control apparatus 14 comprises an STC counter (1), a reproduction time data register (2), and a comparator (3), and all the channels 1 to n are used in common by the time-division operation performed by the synchronous control selecting section 5. However, a plurality of sets of the STC counter, reproduction time data register, and comparator may be provided and each set is used in a time-division form for controlling a plurality of channels.

The decoding synchronous control apparatus 14 in the above embodiment performs the image decoding and display control. However, the decoding and output control of voice data can be performed using a similar structure.

## Claims

1. A decoding synchronous control apparatus for performing synchronous control for reproducing image data and voice data, coded using the MPEG format, in synchronism with each other, where the image data or voice data is assigned to first to nth channels, n being an integer of 2 or more, and the data reproduction is performed based on reference time data indicating a reference time at the coding side, and reproduction time data indicating a target reproduction time based on the reference time at the coding side, the apparatus comprising:
a selecting section (5) for selecting each of the first to nth channels as a target channel for synchronous control in turn at predetermined intervals, and outputting the reference time data and the reproduction time data of the target channel;
a counter (1) for counting up the time from the reference time data, output from the selecting section, in specified intervals;
a register (2) for storing the reproduction time data output from the selecting section;
a comparator (3) for comparing a counter value of the counter and a register value of the register, so as to calculate a difference value of the values; and
a control section (4) for performing synchronous control of the target channel based on the difference value calculated by the comparator and on status information for indicating the status of reproduction of the target channel, and
wherein synchronous control of each channel is performed in time-division form.

2. A decoding synchronous control apparatus for performing synchronous control for reproducing coded image data and voice data in synchronism with each other, where the image data or voice data is assigned to first to nth channels, n being an integer of 2 or more, and the data reproduction is performed based on reference time data indicating a reference time at the coding side, and reproduction time data indicating a target reproduction time based on the reference time at the coding side, wherein:
synchronous control of each channel is performed in time-division form.

3. A decoding synchronous control apparatus as claimed in claim 2, further comprising:
a selecting section (5) for selecting each of the first to nth channels as a target channel for synchronous control in turn at predetermined intervals, and outputting the reference time data and the reproduction time data of the target channel;
a counter (1) for counting up the time from the reference time data, output from the selecting section, in specified intervals;
a register (2) for storing the reproduction time data output from the selecting section;
a comparator (3) for comparing a counter value of the counter and a register value of the register, so as to calculate a difference value of the values; and
a control section (4) for performing synchronous control of the target channel based on the difference value calculated by the comparator and on status information for indicating the status of reproduction of the target channel.

4. A decoding synchronous control apparatus as claimed in claim 3, wherein the selecting section selects any one of the first to nth channels as the target channel based on information about bit streams of the first to nth channels which include the reference time data, reproduction time data, and coded data.

5. A decoding synchronous control apparatus as claimed in claim 4, wherein when a discontinuity is detected in data of a bit stream, the channel corresponding to the bit stream is given priority to be selected by the selecting section as the target channel.

6. A decoding synchronous control apparatus as claimed in claim 4, wherein when an error is detected in data of a bit stream, the channel corresponding to the bit stream is given priority to be selected by the selecting section as the target channel.

7. A decoding synchronous control apparatus as claimed in claim 3, wherein among the first to nth channels, the selecting section does not select a channel, in which only one of image data or voice data is being reproduced, as the target channel.

8. A decoding synchronous control apparatus as claimed in claim 3, wherein the selection section detects the reference time data and the reproduction time data in a bit stream input into the selecting section.

9. A decoding synchronous control apparatus as claimed in any one of claims 2 to 8, wherein synchronous control is performed in any one or both of decoding control of the coded data or reproduction control of the decoded data.

10. A decoding apparatus for decoding and reproducing image data or voice data coded using the MPEG format, where the image data or voice data is included in first to nth bit streams input into the decoding apparatus, corresponding to first to nth channels, n being an integer of 2 or more, the apparatus comprising:
a selecting section (5) for:
selecting each of the first to nth channels as a target channel for synchronous control in turn at predetermined intervals, the synchronous control being performed for reproducing the image data and voice data in synchronism with each other; and
detecting reference time data indicating a reference time at the coding side, and reproduction time data indicating a target reproduction time based on the reference time at the coding side, in the bit stream of the target channel, and outputting the detected data;
a counter (1) for counting up the time from the reference time data, output from the selecting section, in specified intervals;
a register (2) for storing the reproduction time data output from the selecting section;
a comparator (3) for comparing a counter value of the counter and a register value of the register, so as to calculate a difference value of the values; and
a control section (4) for performing any one or both of decoding control of the coded data or reproduction control of the decoded data of the target channel, based on the difference value calculated by the comparator and on status information for indicating the status of reproduction of the target channel, and
wherein synchronous control of each channel is performed in time-division form.

11. A decoding apparatus for decoding and reproducing coded image data or voice data which is included in first to nth bit streams input into the decoding apparatus, corresponding to first to nth channels, n being an integer of 2 or more, the decoding apparatus comprising:
a decoding synchronous control apparatus (14) for performing synchronous control for reproducing the image data and voice data in synchronism with each other, based on reference time data and reproduction time data included in the first to nth bit streams, where the reference time data indicates a reference time at the coding side, and the reproduction time data indicates a target reproduction time based on the reference time at the coding side, and synchronous control of each channel is performed in time-division form.

12. A decoding apparatus as claimed in claim 11, wherein the decoding synchronous control apparatus comprises:
a selecting section (5) for selecting each of the first to nth channels as a target channel for synchronous control in turn at predetermined intervals, and detecting the reference time data and the reproduction time data in the bit stream of the target channel, and outputting the detected data;
a counter (1) for counting up the time from the reference time data, output from the selecting section, in specified intervals;
a register (2) for storing the reproduction time data output from the selecting section;
a comparator (3) for comparing a counter value of the counter and a register value of the register, so as to calculate a difference value of the values; and
a control section (4) for performing any one or both of decoding control of the coded data or reproduction control of the decoded data of the target channel, based on the difference value calculated by the comparator and on status information for indicating the status of reproduction of the target channel.

13. A decoding synchronous control method for performing synchronous control for reproducing image data and voice data, coded using the MPEG format, in synchronism with each other, where the image data or voice data is assigned to first to nth channels, n being an integer of 2 or more, and the data reproduction is performed based on reference time data indicating a reference time at the coding side, and reproduction time data indicating a target reproduction time based on the reference time at the coding side, the method comprising the steps of:
selecting each of the first to nth channels as a target channel for synchronous control in turn at predetermined intervals, and outputting the reference time data and the reproduction time data of the target channel;
counting up the time from the output reference time data in specified intervals;
storing the output reproduction time data;
comparing a value obtained by the count-up operation and a value of the stored output reproduction time data, so as to calculate a difference value of the values; and
performing any one or both of decoding control of the coded data or reproduction control of the decoded data of the target channel, based on the difference value and on status information for indicating the status of reproduction of the target channel, and
wherein synchronous control of each channel is performed in time-division form.

14. A decoding synchronous control method for performing synchronous control for reproducing coded image data and voice data in synchronism with each other, where the image data or voice data is assigned to first to nth channels, n being an integer of 2 or more, and the data reproduction is performed based on reference time data indicating a reference time at the coding side, and reproduction time data indicating a target reproduction time based on the reference time at the coding side, the method comprising the step of:
performing synchronous control of each channel in time-division form.

15. A decoding synchronous control method as claimed in claim 14, wherein the step includes the steps of:
selecting each of the first to nth channels as a target channel for synchronous control in turn at predetermined intervals, and outputting the reference time data and the reproduction time data of the target channel;
counting up the time from the output reference time data in specified intervals;
storing the output reproduction time data;
comparing a value obtained by the count-up operation and a value of the stored output reproduction time data, so as to calculate a difference value of the values; and
performing any one or both of decoding control of the coded data or reproduction control of the decoded data of the target channel based on the difference value and on status information for indicating the status of reproduction of the target channel.
